# EUROPEAN PATENT SPECIFICATION

(11) **EP 3 069 868 B1**
(45) Date of publication and mention of the grant of the patent: **04.06.2025**
(21) Application number: 15159376.1
(22) Date of filing: 17.03.2015
(51) Int. Cl.: B32B 19/02, B32B 27/04, B32B 27/36, B32B 27/38, B32B 27/42, H01B 3/10, H01B 3/12, H01F 27/32

(54) **INORGANIC ELECTRICAL INSULATION MATERIAL**
ANORGANISCHES ELEKTRISCHES ISOLIERMATERIAL
MATÉRIAU D'ISOLATION ÉLECTRIQUE INORGANIQUE

(43) Date of publication of application: 21.09.2016
(73) Proprietor: Hitachi Energy Ltd, 8050 Zürich (CH)
(72) Inventor: Jendenmalm, Anneli, 117 60 Stockholm (SE); Girlanda, Orlando, 723 56 Västerås (SE); Klys, Pawel, 93 008 Lodz (PL); Singha, Santanu, 722 28 Västerås (SE)
(74) Representative: Valea AB

(56) References cited:
- EP-A1- 2 533 251
- WO-A1-2012/073360
- WO-A2-2004/064082
- US-A- 4 522 771
- DATABASE WPI Week 197249, Derwent World Patents Index; AN 1972-78322T, XP002743618

## Description

### TECHNICAL FIELD

The present disclosure relates to a solid insulation material for electrical devices.

### BACKGROUND

Traditionally, oil-filled transformers use mineral oil as the dielectric liquid for both insulating and cooling purposes and cellulose or aramid papers as solid insulation for the conductors, layers and main insulation. Cellulose based materials have low cost and the transformer industry has great experience on cellulose-oil insulation systems over long time. In comparison, aramid insulations are expensive, but they are more suitable for use at high temperatures.

Cellulose insulating materials, have some inherent disadvantages for transformer insulation purposes, e.g., comparatively low dielectric strength, affinity towards water, poor thermal degradation properties and high shrinkage. For transformer insulation design with cellulose materials, these poor characteristics have to be compensated by having a dielectric design criterion with low dielectric stress and/or through the use of excess cellulose insulating materials. Excess cellulose materials in a transformer increases the drying time of the insulation, increases the overall size of the transformer and has a negative influence on the dielectric integrity of the insulation system. Further, some of the cellulose properties like the thermal degradation characteristics and affinity for water also restrict the continuous operation of transformers at higher temperatures (e.g. under overloaded conditions).

In different parts of electrical transformers, insulating material is used to avoid flash-overs and such. This insulating material is typically cellulose based since such a paper or pressboard material is cheap and easy to handle while giving adequate insulation. Examples of insulators in an oil filled transformer are:
- Spacers, positioned between the turns/discs of a winding, allowing oil to circulate there between.
- axial sticks, positioned between the winding and the core, or between different windings.
- cylinders positioned around a winding, between a winding and its core, or between different windings.
- winding tables, positioned atop and below the plurality of windings, supporting the same.
- conductor insulation of the conductor of the transformer windings.

To improve the electrical properties of the insulation material, attempts have been made to use inorganic nanoparticles as a filler material in the solid insulation material e.g. cellulose based ditto.

US 2014/022039 discloses the use of nano-fillers in an aliphatic polyamide insulation material for insulating coils in an oil-filled transformer. The nano-fillers may be titanium dioxide (TiO2), silicon dioxide (SiO2) or aluminium oxide (Al₂O3), or mixtures thereof.

US 2010/148903 discloses a voltage transformer with a solid insulating material comprising polydicyclopentadiene. The insulating material may comprise a nano sized inorganic filler, e.g. siliceous materials, carbonaceous materials, metal hydrates, metal oxides, metal borides, metal nitrides, and mixtures of two or more of the foregoing.

WO 2011/003635 discloses a nano-composite insulating material comprising semiconducting nanoparticles that consist in particular of boron nitride nanotubes (BNNT) and are distributed in an electrically insulating insulator, such as cellulose fibres.

WO 2004/064082 discloses a battery pack insulator where an insulating element is bound to a tray of plastic or metal to form a box in which the battery may reside. The insulating element comprises a sheet or mat of (e.g. non-woven) inorganic fibres. The inorganic fibres may be mixed with up to 40% of thermoplastic polymeric fibres which act as binder for the inorganic fibres. The sheet or mat of the insulating element has an average sheet thickness as low as about 1.0 mm.

US 4,522,771 discloses an insulation layer for a distribution transformer. The insulation layer is made up of a cement mixed with inorganic particles, which is reinforced by 1-10% of inorganic fibres and pressed to a layer of 1-10 mils thickness.

EP 2533 251 discloses an insulation material of an epoxy resin filled with elastomer particles and inorganic particles, for a transformer. The inorganic particle has a very small thermal expansion coefficient, such as silica or alumina. It is said that an excessive addition of the inorganic particle considerably increases the viscosity of the resin to reduce a workability. Further, it may cause a void in the resin hardened material. The void in the resin hardened material is in danger of causing a decrease in insulation properties due to a concentration of an electric field, or a decrease in a mechanical strength.

WO 2012/073360 discloses an insulating sheet that can increase handleability and storage stability in an uncured state and, further, can increase heat dissipation characteristics and adhesiveness of the cured article after curing. The insulating sheet is used to make a thermal conductor with thermal conductivity of 10 W/m·K or greater adhere to an electrically conductive layer. The insulating sheet contains a polymer with weight average molecular weight of 10000 or greater, a curable compound that has a molecular weight of 1200 or less and has an epoxy group or oxetanyl group, a curing agent, and an inorganic filler. The insulating sheet has a content of the inorganic filler between 60 wt% and 95 vol%. The inorganic filler is preferably spherical or crushed alumina. The crushed filler has an aspect ratio of 1.5-20. The insulating sheet is obtained by molding, e.g. by solvent casting or film extrusion, followed by defoaming.

Document "XP002743618 - Flame resistant electrical insulating sheet" discloses a film for use in a flyback transformera base film (e.g. of polyester) having inorganic particles deposited thereon. There is thus not disclosed at least 90 wt% inorganic particles bound by a binder.

However, the use of small amounts of the filler material gives only limited improvements to the electrical properties, while larger amounts markedly worsen the mechanical properties of the insulation material, e.g. making it brittle.

### SUMMARY

It is an objective of the present invention to provide an improved insulation material for use in electrical devices, having improved electrically insulating properties.

According to an aspect of the present invention, there is provided an electrically insulating inorganic sheet comprising at least 90% by weight inorganic particles, and a binder which binds the particles together to form the sheet. The binder thus makes up less than 10% by weight (wt%) of the inorganic sheet. The sheet is suitable for use as solid insulation in an electrical device, e.g. an oil-filled power transformer, and may e.g. form a layer in an insulating laminate.

According to another aspect of the present invention, there is provided an electrical device comprising an embodiment of the electrically insulating inorganic sheet of the present disclosure, as solid insulation in the electrical device.

According to another aspect of the present invention, there is provided a laminate comprising an electrically insulating inorganic layer laminated to another electrically insulating layer, wherein the electrically insulating inorganic layer comprises at least 90% by weight inorganic particles, and a binder which binds the particles together.

According to another aspect of the present invention, there is provided a method of producing an electrically insulating inorganic sheet for use as solid insulation in an electrical device. The method comprises forming the sheet from a mixture of at least 90% by weight inorganic particles, and a binder which binds the particles together.

The present invention proposes an insulation system e.g. for distribution transformers (DTR), comprising inorganic sheets. The inorganic sheet material may be used as a single material in the insulation system or can be used as a composite (laminate) together with other insulation materials, such which are commonly used in transformers or other electrical devices, e.g. cellulose based paper/pressboard or aramid paper/pressboard. The use of the inorganic sheets gives a higher dielectric strength of the solid insulation which in turn may enable reduced use of materials in the electrical device, thereby reducing its size, as well as reduce the risk of flash-overs.

Further, the drying time may also be reduced since the amount of conventional solid insulation material may be reduced. The inorganic sheet may also have a higher thermal conductivity.

The proposed material solution could also be implemented in other transformer types, e.g. other liquid-filled transformers or dry transformers. However, some of the benefits in these transformers could come from different areas (e.g. conductor insulation allowing higher operation temperatures) than in the case of DTRs.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic sectional view of an embodiment of a transformer with solid insulation, in accordance with the present invention.
Fig 2 is a schematic illustration of an embodiment of an inorganic sheet in accordance with the present invention.
Fig 3 is a schematic illustration of an embodiment of a laminate of a plurality of inorganic sheets, in accordance with the present invention.
Fig 4 is a schematic illustration of an embodiment of a laminate of a plurality different layers, including at least one inorganic sheet, in accordance with the present invention.

### DETAILED DESCRIPTION

Embodiments will now be described more fully hereinafter with reference to the accompanying drawings, in which certain embodiments are shown. Rather, the following embodiments are provided by way of example so that this disclosure will be thorough and complete, and will fully convey the scope of the disclosure to those skilled in the art. Like numbers refer to like elements throughout the description.

In accordance with the present invention, the electrically insulating inorganic sheet comprises at least 90 wt% inorganic particles, and consequently less than 10 wt% binder. It is because of the high amount of particles of an inorganic material that the sheet is herein referred to as an inorganic sheet. However, the binder does not have to be inorganic. Rather, the binder may be any suitable binder for binding the inorganic particles to each other, e.g. a curable binder such as epoxy or polyester, or a phenolic resin.

Further, the inorganic sheet may be porous, e.g. able to allow gas and/or liquid to impregnate it and/or to pass through it. This may be advantageous in e.g. a liquid-filled electrical device where the insulation liquid preferably impregnates the solid insulation material to reduce the risk of flash-overs due to air bubbles or pockets in the insulation material. However, in other embodiments, the inorganic sheet may be non-porous and/or impregnable (not allowing gas and/or liquid to impregnate it and/or to pass through it).

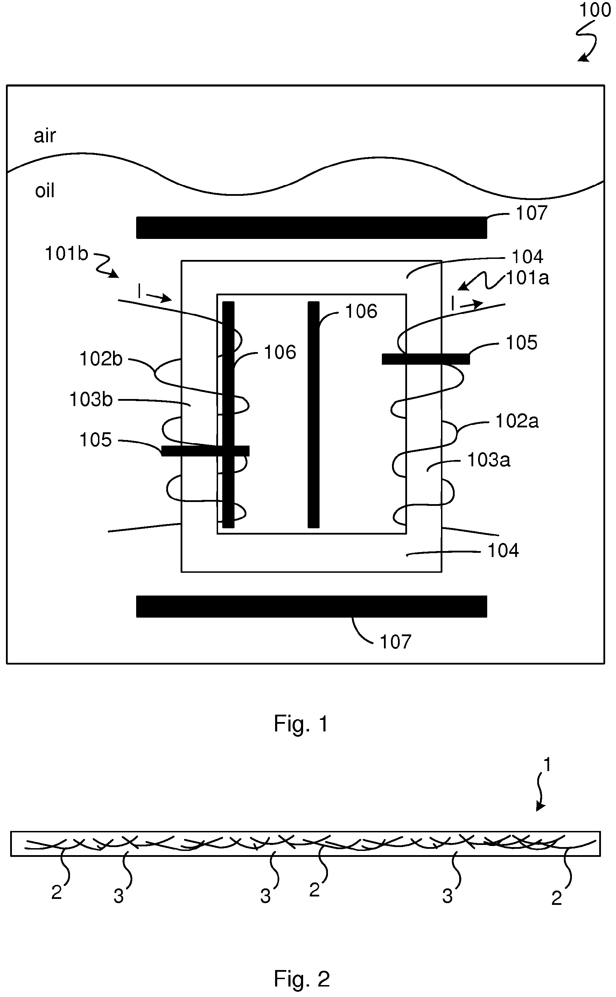

Figure 1 schematically illustrates an embodiment of an electrical device 100, here in the form of a power transformer which is at least partly liquid-filled, e.g. with a mineral oil or an ester liquid, (schematically illustrated by the wavy oil-air interface indicated in the figure). A transformer is used as an example, but the inorganic sheet of the present invention may be useful also in other electrical devices, e.g. motors or switches/circuit breakers, which are dry or liquid-filled. The transformer in figure 1 is a single-phase transformer, but the discussion is in applicable parts relevant for any type of transformer e.g. a three-phase transformer such as with a three or five legged core. It is noted that the figure is only schematic and provided to illustrate in particular some of the different kinds of solid insulators in which the inorganic sheet of the present invention may be included.

Two neighbouring windings 101 (a & b) are shown, each comprising a coil of an electrical conductor 102 (a & b) around a core 103 (a & b), e.g. a metal core. The cores 103a and 103b are connected and fixed to each other by means of top and bottom yokes 104. This is thus one example set up of a transformer, but any other transformer set up can alternatively be used with the present invention, as is appreciated by a person skilled in the art.

The conductors 102 are insulated from each other and from other parts of the transformer 100 by means of the fluid which the transformer contains (e.g. an oil). However, also solid insulators are needed to structurally keep the conductors and other parts of the transformer immobile in their intended positions. Today, such solid phase insulators are typically made of cellulose based pressboard or Nomex^{™} impregnated by the insulating fluid. In contrast, according to the present invention, an inorganic sheet is used, possibly laminated with sheet(s) of a traditional insulation material e.g. based on cellulose or aramid. The insulators may e.g. be in the form of spacers 105 separating turns or discs of a winding 101 from each other, axial sticks 106 e.g. separating the conductor 105 winding 101 from its core 103 or from another winding 101, winding tables 107 separating the windings from other parts of the transformer 100 e.g. forming a support or table on which the windings, cores, yokes etc. rest, as well as insulating coating of, or winding around, the conductor 102. In figure 1, only a few different example insulators are shown for clarity. For instance, a cylinder around a winding, between a winding and its core or between different windings (e.g. between high voltage and low voltage windings), made with the insulating inorganic sheet may be used in some embodiments. Such a cylinder may provide mechanical stability to windings when the conductor is e.g. wound over/onto the cylinder, and it may break the large oil gaps between two windings 101 (e.g. low voltage and high voltage winding), which improves the overall insulation strength of the gap between the two windings. In some embodiments, concentric cylinders around the core may be used to separate and insulate different conductor layers of a winding from each other.

The electrical transformer 100 may be configured for an operating temperature of at least 105°C, at least 130°C or at least 155°C. As defined in IEC 60076-14 (Table 4), the transformer uses high temperature class materials and therefore can be designed with Hybrid insulation system or Semi Hybrid insulation system or mixed insulation system or conventional insulation system. Therefore the insulator in accordance with the present invention can e.g. be in a temperature class of solid insulating materials starting from 105°C (Class A), to/from 130°C (class B), to/from 155°C (class F) or to/from 180°C (class H).

As discussed above, the electrical transformer may be fluid-filled, for improved insulation and/or heat exchange. The fluid may e.g. be mineral oil, silicon oil, synthetic ester or natural ester, or a gas (in a dry transformer). For high temperature applications, it may be convenient to use an ester oil, e.g. a natural or synthetic ester oil. Preferably, the insulating material and the fluid should not affect each other's properties, and should not react with each other e.g. to dissolve the inorganic sheet.

Figure 2 illustrates an embodiment of an inorganic sheet 1 in accordance with the present invention. The sheet 1 comprises inorganic particles 2, here in the form of fibres but could e.g. be in the form of flakes and a binder 3. For clarity, the figure may give the impression that the main constituent of the sheet 1 is the binder 3. However, the binder is less than 10 wt% of the sheet 1, typically less than 5 wt% or less than 3 or 1 wt%. The main component of the sheet 1 is thus the inorganic particles 2 which constitutes at least 90 wt% of the sheet 1, e.g. at least 95 wt%, such as 97 or 99 wt%.

The inorganic particles may be of an electrically insulating material from commonly used minerals, e.g., TiO2 (Titanium dioxide), SiO2 (Silicon dioxide), Al₂O3 (Aluminium oxide), BaTiO3 (Barium titanate), SrTiO3 (Strontium titanate), ZrO2 (Zirconium dioxide) and/or BN (Boron nitride). It may be convenient to use inorganic particles 2 in the form of fibres since fibres are readily produced and are easy to bind together with a small amount of binder 3. Inorganic fibres may be prepared e.g. by an electrospinning technique. The fibres may in some embodiments have an average length of between 1 millimetre and 1 centimetre, but may in other embodiments on average be shorter than 1 millimetre e.g. nanofibers. The fibres may have an average diameter within the range of between 1 nanometre and 200 micrometres, typically between 1 and 10 mikrometres. The fibres may have an aspect ratio (diameter to length) within the range of 1:5 to 1:20, e.g. 1:7 to 1:15.

In other embodiments, flakes may be preferred, e.g. of a thickness between 1 and 100 micrometres, e.g. between 1 and 10 micrometres, and having an average area within the range of 1 mm² to 1 cm².

The inorganic sheet 1 is thin since it may have better electrical properties and be more bendable. According to the invention, the inorganic sheet 1 has a thickness within the range of from 10 nanometres to 100 micrometres, e.g. from 0.1 to 10 micrometres such as from 0.5 to 5 micrometres.

In preparation for lamination of the inorganic sheet 1, it may in some embodiments be provided with dots of a surface binder, for facilitating binding of the inorganic sheet to another electrically insulating sheet to form a laminate, or to bind it to a metal surface (e.g. a conductor). In some embodiments, the surface binder may be of the same material as the binder 3 binding the inorganic particles together, or any other suitable surface binder. A laminate comprising an electrically insulating inorganic layer 1 may be formed by laminating an electrically insulating inorganic sheet 1 to another electrically insulating sheet, or to itself in a roll, or by coating the other electrically insulating sheet with the binder 3 and adding the inorganic particles 2 thereto thus forming the electrically insulating inorganic sheet/layer 1 directly on the other electrically insulating sheet.

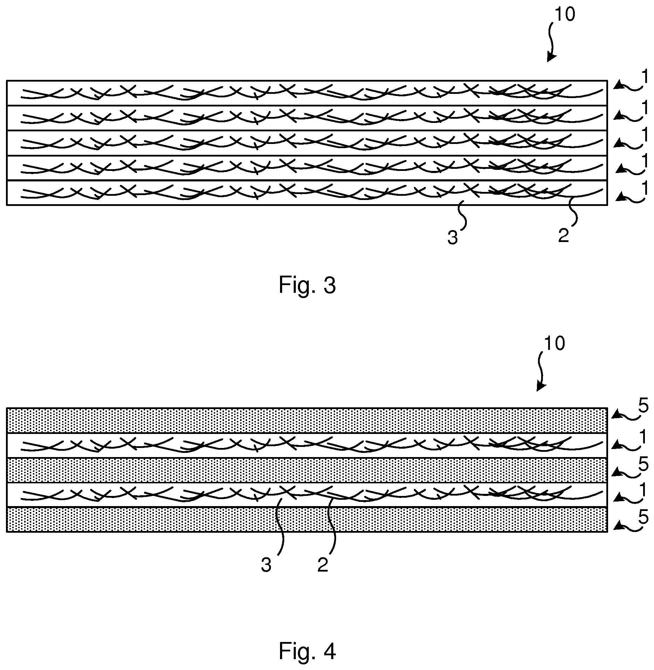

Figure 3 illustrates an embodiment of a laminate 10 formed from a plurality of layers of inorganic sheet(s) 1. The inorganic sheet 1 may be too thin to use as it is and may thus conveniently be used as layers in an insulator laminate 10. The laminate 10 may e.g. be formed by a plurality of sheets 1 stacked on top of each other and bound together by a surface binder, e.g. a curable surface binder such as epoxy or the like. Alternatively, the laminate 10 may be formed by a sheet 1 being rolled up onto itself to form a laminate roll where a plurality of the layers are made up of the same original sheet 1. Such a laminate roll may e.g. be used to insulate a conductor 102. The laminate 10 may in some embodiments have a thickness within the range of 0.1 micrometres to 1 centimetre, depending on where the insulator is to be used. Typically, the laminate 10 may have a thickness within the range of 10 micrometres to 15 millimetres, typically 50 micrometres to 5 millimetres.

Figure 4 illustrates an embodiment of a laminate 10 formed from at least one layer of the inorganic sheet 1 and at least one layer 5 of another insulating material, e.g. cellulose or aramid based (or based on another synthetic polymer), to form a composite. The inorganic sheet 1 material may in some embodiments be too brittle or otherwise unstable for use in a desired application, in which case the inorganic sheet 1 may be laminated to another insulating sheet 5, e.g. an electrically insulating polymer sheet of e.g. cellulose or aramid, to form a laminate 10. As in the laminate of figure 3, The laminate 10 may e.g. be formed by a plurality of sheets 1 and 5 alternately stacked on top of each other and bound together by a surface binder, e.g. a curable surface binder such as epoxy or the like. Alternatively, the laminate 10 may be formed by a sheet 1, laminated to a polymer sheet 5 or between two polymer sheets 5, being rolled up onto itself to form a laminate roll. Such a laminate roll may e.g. be used to insulate a conductor 102. It may be convenient that the two externally facing layers of the laminate 10 are of a polymer sheet 5, whereby the inorganic sheet(s) 1 are protected from the ambient environment of the laminate by the polymer sheets 5.

In some embodiments, the insulator laminate 10 is in the form of at least one of a spacer 105 between turns or discs of the winding 101, an axial stick 106 outside or inside of the winding 101 e.g. between the winding and the core 103, a cylinder around a winding, between a winding and its core or between windings, a winding table 107 positioned atop of or below the coil winding and a conductor insulation adhered to and surrounding the conductor 102 of the winding coil. The electrical conductor 102 can e.g. be an electrically conducting wire, thread or strip, which may in some embodiments suitably be insulated by being wound or coated with the inorganic sheet 1 or a laminate 10 comprising the inorganic sheet in accordance with the present invention. These are examples of insulators in a transformer where the inorganic sheet material of the present disclosure can be beneficially used.

By means of embodiments of the present invention, several advantages may be obtained, depending on the application in which the inorganic sheet 1 is used.
- Significant increase in the dielectric breakdown strength since the inorganic particles 2 have higher breakdown strengths (both individual sheets 1 and laminates/composites 10) as compared to traditional cellulose or polymeric insulators.
- The mechanical strength of the solid insulators may be tuned since the mechanical properties of the inorganic particles 2 may influence the overall mechanical strength of the laminate/composite 10. Also, if inorganic fibres 2 are used, the mechanical strength may be tuned by the fibre orientation.
- Possibility to enhance the thermal class of the insulator.
- Increased life of the insulator due to slower degradation of the inorganic sheet 1.
- Enhanced thermal conductivity since the thermal conductivity of the insulator could be enhanced by means of the inorganic particles 2 having higher thermal conductivity.
- Reduced material usage in a transformer 100 due to higher breakdown strength of the solid insulators.

Use of less materials in a transformer 100 may have the following advantageous effects:
* Smaller transformer size.
* Reduction of the winding assembly time.
* Reduction of the drying time of the transformer.
* Improved efficiency of the manufacturing process.

The above mentioned and described embodiments are given as examples.

## Claims

1. An electrically insulating inorganic sheet (1) comprising at least 90% by weight inorganic particles (2) in the form of fibres or flakes, and a binder (3) which binds the particles together to form the sheet, for use as solid insulation in an electrical device (100), wherein the inorganic sheet (1) has a thickness within the range of from 10 nanometres to 100 micrometres.

2. The inorganic sheet of claim 1, wherein the fibres have an average length of between 1 millimetre and 1 centimetre.

3. The inorganic sheet of claim 1 or 2, wherein the fibres have been produced by an electrospinning technique.

4. The inorganic sheet of any preceding claim, wherein the inorganic sheet (1) comprises at least 95%, e.g. 97 or 99%, by weight inorganic particles (2).

5. The inorganic sheet of any preceding claim, wherein the inorganic sheet (1) is, on a surface of the inorganic sheet (1), provided with dots of a surface binder, for facilitating binding of the inorganic sheet to another electrically insulating sheet (1 or 5) to form a laminate (10 ).

6. The inorganic sheet of any preceding claim, wherein the inorganic sheet (1) is a layer in a laminate (10).

7. The inorganic sheet of claim 6, wherein the inorganic sheet (1) is laminated to another inorganic sheet (1) or to an electrically insulating polymer sheet (5) to form the laminate (10).

8. The inorganic sheet of claim 7, wherein the polymer sheet (5) is cellulose based or aramid based.

9. The inorganic sheet of any preceding claim, wherein the inorganic particles (2) are made from at least one of the inorganic materials titanium dioxide, silicon dioxide, aluminium oxide, barium titanate, strontium titanate, zirconium dioxide and boron nitride.

10. A laminate (10) comprising an electrically insulating inorganic sheet (1) laminated to another electrically insulating layer (1 or 5), wherein the electrically insulating inorganic sheet (1) comprises at least 90% by weight inorganic particles (2) in the form of fibres or flakes, and a binder (3) which binds the particles together, wherein the inorganic sheet (1) has a thickness within the range of from 10 nanometres to 100 micrometres, and wherein the inorganic sheet is porous for allowing gas and/ or liquid to impregnate and/ or pass through the inorganic sheet.

11. An electrical device (100) comprising an electrically insulating inorganic sheet (1) of any preceding claim, as solid insulation.

12. The electrical device of claim 11, wherein the electrical device (100) is liquid-filled such that the inorganic sheet (1) is at least partly immersed in the liquid.

13. The electrical device of claim 11 or 12, wherein the electrical device is a transformer (100).

14. The electrical device of claim 13, wherein the transformer (100) is fluid-filled.

15. A method of producing an electrically insulating inorganic sheet (1) for use as solid insulation in an electrical device (100 ), the method comprising forming the sheet from a mixture of at least 90% by weight inorganic particles (2) in the form of fibres or flakes, and a binder (3) which binds the particles together, the method, optionally, further comprising laminating the inorganic sheet (1) to another inorganic sheet (1) or to an electrically insulating polymer sheet (5) to form a laminate (10 ), wherein the inorganic sheet (1) has a thickness within the range of from 10 nanometres to 100 micrometres, and wherein the inorganic sheet is porous for allowing gas and/ or liquid to impregnate and/or pass through the inorganic sheet.

## Patentansprüche

1. Elektrisch isolierende anorganische Folie (1), die mindestens 90 Masse% anorganische Partikel (2) in Gestalt von Fasern oder Flocken und ein Bindemittel (3) umfasst, das die Partikel zusammenbindet, um die Folie auszubilden, zur Verwendung als feste Isolation in einer elektrischen Vorrichtung (100), wobei die anorganische Folie (1) eine Dicke im Bereich von 10 Nanometer bis 100 Mikrometer aufweist.

2. Anorganische Folie nach Anspruch **1,** wobei die Fasern eine durchschnittliche Länge zwischen 1 Millimeter und 1 Zentimeter aufweisen.

3. Anorganische Folie nach Anspruch 1 oder **2,** wobei die Fasern durch eine Elektrospinntechnik hergestellt wurden.

4. Anorganische Folie nach einem vorhergehenden Anspruch, wobei die anorganische Folie (1) mindestens 95 Masse%, **z. B.** 97 oder 99 Masse% anorganische Partikel (2) umfasst.

5. Anorganische Folie nach einem der vorhergehenden Ansprüche, wobei die anorganische Folie (1) auf einer Oberfläche der anorganischen Folie (1) mit Punkten eines Oberflächenbindemittels versehen ist, um Binden der anorganischen Folie an eine andere elektrisch isolierende Folie (1 oder 5) zu ermöglichen, um ein Laminat (10) auszubilden.

6. Anorganische Folie nach einem vorhergehenden Anspruch, wobei die anorganische Folie (1) eine Schicht in einem Laminat (10) ist.

7. Anorganische Folie nach Anspruch 6, wobei die anorganische Folie (1) auf eine andere anorganische Folie (1) oder auf eine elektrisch isolierende Polymerfolie (5) laminiert ist, um das Laminat (10) auszubilden.

8. Anorganische Folie nach Anspruch 7, wobei die Polymerfolie (5) auf Cellulose oder Aramid basiert.

9. Anorganische Folie nach einem vorhergehenden Anspruch, wobei die anorganischen Partikel (2) aus mindestens einem der anorganischen Materialien Titandioxid, Siliziumdioxid, Aluminiumoxid, Bariumtitanat, Strontiumtitanat, Zirkoniumdioxid und Bornitrid hergestellt sind.

10. Laminat (10), eine elektrisch isolierende anorganische Folie (1) umfassend, die auf eine andere elektrisch isolierende Schicht (1 oder 5) laminiert ist, wobei die elektrisch isolierende anorganische Folie (1) mindestens 90 Masse% anorganische Partikel (2) in Gestalt von Fasern oder Flocken und ein Bindemittel (3) umfasst, das die Partikel zusammenbindet, wobei die anorganische Folie (1) eine Dicke im Bereich von 10 Nanometer bis 100 Mikrometer aufweist und wobei die anorganische Folie porös ist, um zu ermöglichen, dass Gas und/oder Flüssigkeit die anorganische Folie imprägniert und/oder durchdringt.

11. Elektrische Vorrichtung (100), eine elektrisch isolierende anorganische Folie (1) nach einem vorhergehenden Anspruch als feste Isolation umfassend.

12. Elektrische Vorrichtung nach Anspruch 11, wobei die elektrische Vorrichtung (100) derartig flüssigkeitsgefüllt ist, dass die anorganische Folie (1) mindestens teilweise in die Flüssigkeit eingetaucht ist.

13. Elektrische Vorrichtung nach Anspruch 11 oder 12, wobei die elektrische Vorrichtung ein Transformator (100) ist.

14. Elektrische Vorrichtung nach Anspruch 13, wobei der Transformator (100) fluidgefüllt ist.

15. Verfahren zum Herstellen einer elektrisch isolierenden anorganischen Folie (1) zur Verwendung als feste Isolation in einer elektrischen Vorrichtung (100), wobei das Verfahren Ausbilden der Folie aus einer Mischung von mindestens 90 Masse% anorganischer Partikel (2) in Gestalt von Fasern oder Flocken und einem Bindemittel (3) umfasst, das die Partikel zusammenbindet, wobei das Verfahren gegebenenfalls weiterhin Laminieren der anorganischen Folie (1) auf eine andere anorganische Folie (1) oder auf eine elektrisch isolierende Polymerfolie (5) umfasst, um ein Laminat (10) auszubilden, wobei die anorganische Folie (1) eine Dicke im Bereich von 10 Nanometer bis 100 Mikrometer aufweist und wobei die anorganische Folie porös ist, um zu ermöglichen, dass Gas und/oder Flüssigkeit die anorganische Folie imprägniert und/oder durchdringt.

## Revendications

1. Feuille inorganique électriquement isolante (1) comprenant au moins 90 % en poids de particules inorganiques (2) sous forme de fibres ou de paillettes, et un liant (3) qui lie les particules entre elles pour former la feuille, destinée à servir d'isolant solide dans un dispositif électrique (100), la feuille inorganique (1) ayant une épaisseur comprise entre 10 nanomètres et 100 micromètres.

2. Feuille inorganique selon la revendication 1, les fibres présentant une longueur moyenne comprise entre 1 millimètre et 1 centimètre.

3. Feuille inorganique selon la revendication 1 ou 2, les fibres ayant été produites par une technique d'électrofilage.

4. Feuille inorganique selon l'une quelconque des revendications précédentes, la feuille inorganique (1) comprenant au moins 95 %, par exemple 97 ou 99 %, en poids de particules inorganiques (2).

5. Feuille inorganique selon l'une quelconque des revendications précédentes, la feuille inorganique (1) étant, sur une surface de la feuille inorganique (1), pourvue de points d'un liant de surface afin de faciliter la liaison de la feuille inorganique à une autre feuille électriquement isolante (1 ou 5) pour former un stratifié (10).

6. Feuille inorganique selon l'une quelconque des revendications précédentes, la feuille inorganique (1) étant une couche dans un stratifié (10).

7. Feuille inorganique selon la revendication 6, la feuille inorganique (1) étant stratifiée avec une autre feuille inorganique (1) ou avec une feuille polymère électriquement isolante (5) pour former le stratifié (10).

8. Feuille inorganique selon la revendication 7, la feuille polymère (5) étant à base de cellulose ou à base d'aramide.

9. Feuille inorganique selon l'une quelconque des revendications précédentes, les particules inorganiques (2) étant constituées d'au moins l'un des matériaux inorganiques suivants : dioxyde de titane, dioxyde de silicium, oxyde d'aluminium, titanate de baryum, titanate de strontium, dioxyde de zirconium et nitrure de bore.

10. Stratifié (10) comprenant une feuille inorganique électriquement isolante (1) stratifiée avec une autre couche électriquement isolante (1 ou 5), la feuille inorganique électriquement isolante (1) comprenant au moins 90 % en poids de particules inorganiques (2) sous forme de fibres ou de paillettes et un liant (3) qui lie les particules entre elles, la feuille inorganique (1) ayant une épaisseur comprise entre 10 nanomètres et 100 micromètres, et la feuille inorganique étant poreuse afin de permettre l'imprégnation et/ou le passage de gaz et/ou de liquide à travers la feuille inorganique.

11. Dispositif électrique (100) comprenant, en tant qu'isolant solide, une feuille inorganique électriquement isolante (1) selon l'une quelconque des revendications précédentes.

12. Dispositif électrique selon la revendication 11, le dispositif électrique (100) étant rempli de liquide de telle sorte que la feuille inorganique (1) est au moins partiellement immergée dans le liquide.

13. Dispositif électrique selon la revendication 11 ou 12, le dispositif électrique étant un transformateur (100).

14. Dispositif électrique selon la revendication 13, le transformateur (100) étant rempli de fluide.

15. Procédé de production d'une feuille inorganique électriquement isolante (1) destinée à servir d'isolant solide dans un dispositif électrique (100), ledit procédé comprenant la formation de la feuille à partir d'un mélange d'au moins 90 % en poids de particules inorganiques (2) sous forme de fibres ou de paillettes et d'un liant (3) qui lie les particules entre elles, le procédé comprenant en outre, de manière facultative, le laminage de la feuille inorganique (1) avec une autre feuille inorganique (1) ou avec une feuille polymère électriquement isolante (5) pour former un stratifié (10), la feuille inorganique (1) ayant une épaisseur comprise entre 10 nanomètres et 100 micromètres, la feuille inorganique étant poreuse de façon à permettre l'imprégnation et/ou le passage de gaz et/ou de liquide à travers la feuille inorganique.
